# FASCICULE DE BREVET EUROPEEN

(11) **EP 2 143 361 B1**
(45) Date de publication et mention de la délivrance du brevet: **15.06.2016**
(21) Numéro de dépôt: 09161049.3
(22) Date de dépôt: 26.05.2009
(51) Int. Cl.: A47J 37/06, A47J 37/07

(54) **Appareil de cuisson, notamment du type gril à gaz**
Gargerät, insbesondere Gasgrillgerät
Cooking device, in particular gas grill

(30) Priorité: 04.07.2008 FR 0803811
(43) Date de publication de la demande: 13.01.2010
(73) Titulaire: Application des Gaz, 69230 Saint Genis Laval (FR)
(72) Inventeur: Paysant, Christophe, 42580, LA TOUR EN JAREZ (FR); Cursoux, Bruno, 69440, MORNANT (FR)
(74) Mandataire: Verriest, Philippe

(56) Documents cités:
- EP-A- 0 713 668
- EP-A- 1 517 093
- EP-A- 1 680 994
- EP-A- 1 886 606

## Description

La présente invention concerne un appareil de cuisson, notamment du type gril à gaz.

Il est connu, notamment du document EP0713668, de réaliser un appareil de cuisson, notamment du type gril à gaz, comprenant :
- un puits de cuisson,
- au moins un brûleur à gaz radiant sur le côté du puits de cuisson, présentant une surface rayonnante émettant des infrarouges, adjacente au puits de cuisson et dont l'orientation par rapport à ce dernier présente une composante verticale,
- une grille de cuisson transversale occupant une ouverture supérieure du puits de cuisson,
- un fond s'étendant au travers du puits de cuisson, situé en dessous de la surface rayonnante présentant une perméabilité vis-à-vis des liquides s'écoulant à partir de la grille vers des moyens de recueil situés en dessous du fond.

Cet appareil donne satisfaction en ce qu'il permet une cuisson plus saine, en évitant ou diminuant les flammes et les fumées cancérigènes, tout en assurant un bon rendement énergétique.

Toutefois, il est souhaitable d'améliorer l'homogénéité de la cuisson dans un appareil du type précité, tout en conservant un bon rendement et en assurant une cuisson saine.

La présente invention a pour but de résoudre tout ou partie des inconvénients mentionnés ci-dessus.

A cet effet, la présente invention a pour objet un appareil de cuisson selon le type précité, caractérisé en ce que le fond comporte au moins une première portion pleine inclinée réfléchissante tournée vers la surface rayonnante d'un brûleur et une seconde zone latérale ajourée située entre la surface rayonnante d'un brûleur et la première zone pleine inclinée réfléchissante.

Les dispositions selon l'invention permettent effectivement de répartir de façon plus homogène les températures sur la surface de la grille, tout en évitant de créer à la surface du fond des points d'une température trop importante qui pourraient occasionner une inflammation du jus tombant de la grille.

Le fond selon l'invention agit comme un diffuseur de la chaleur produite par les brûleurs radiants. Les zones réfléchissantes redirigent une partie des rayonnements infrarouges vers la grille de cuisson, notamment au niveau des points de la grille éloignés des brûleurs radiants.

Avantageusement, la seconde zone ajourée est inclinée vers le bas en direction du centre du puits.

Selon un mode de réalisation, l'extrémité supérieure d'une première zone pleine est positionnée au dessous d'au moins une partie d'une zone ajourée.

Ces dispositions permettent de limiter l'échauffement de la première zone réfléchissante qui reste en dessous de la surface rayonnante des brûleurs et ainsi limite son exposition au rayonnement infrarouge.

Avantageusement, au moins une seconde zone ajourée ou une première zone pleine comprend au moins une rainure ou nervure ménagée dans le sens de la pente de cette zone.

Selon un mode de réalisation, le fond comporte des lumières le traversant au niveau d'une liaison entre une première zone pleine inclinée et une seconde zone ajourée.

Ces dispositions permettent une évacuation efficace des jus provenant de la grille de cuisson en une position constituant un point bas du fond.

Avantageusement, la première zone pleine réfléchissante est inclinée par rapport au plan de la grille de cuisson d'un angle compris entre 10 et 50°.

Selon un mode de réalisation, la première zone pleine réfléchissante est inclinée par rapport au plan de la grille de cuisson d'un angle compris entre 20 et 30°.

Selon un mode de réalisation, l'appareil comprend deux brûleurs à gaz situés de part et d'autre du puits de cuisson et dans lequel le fond comprend deux premières zones planes inclinées réfléchissante tournées respectivement vers les deux surfaces rayonnantes des deux brûleurs et deux secondes zones latérales ajourées situées chacune entre un brûleur et les deux premières zones.

L'invention sera mieux comprise à l'aide de la description détaillée qui est exposée ci-dessous en regard du dessin annexé dans lequel :
La figure 1 est une vue en perspective d'une portion d'un appareil de cuisson, une portion du puits de cuisson ayant été supprimée,
La figure 2 est une vue en coupe de l'appareil de cuisson de figure 1,

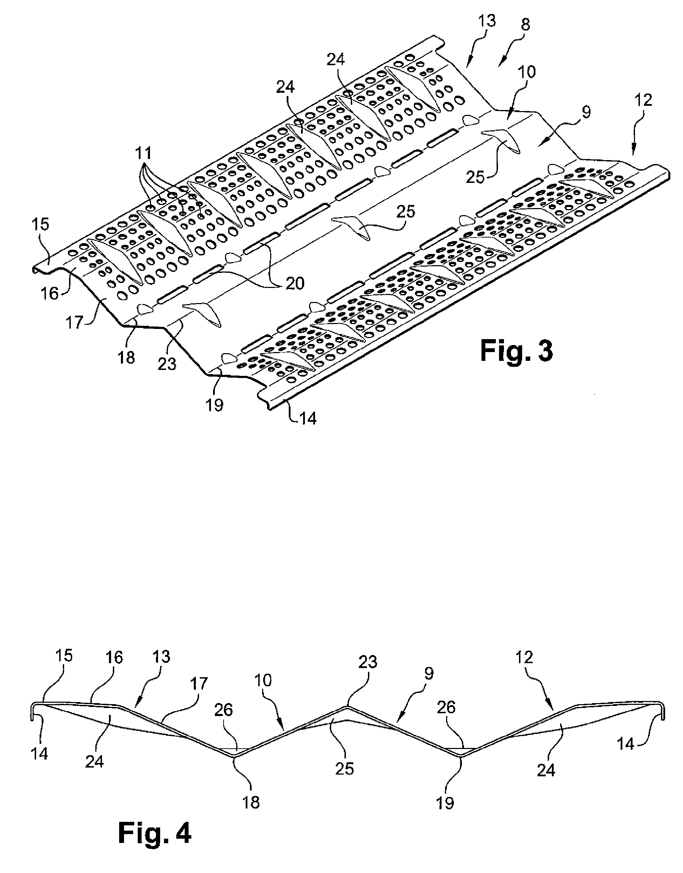

La figure 3 est une vue en perspective du fond de l'appareil de cuisson de figure 1 ;
La figure 4 est une vue en coupe du fond de l'appareil de cuisson de figure 1.

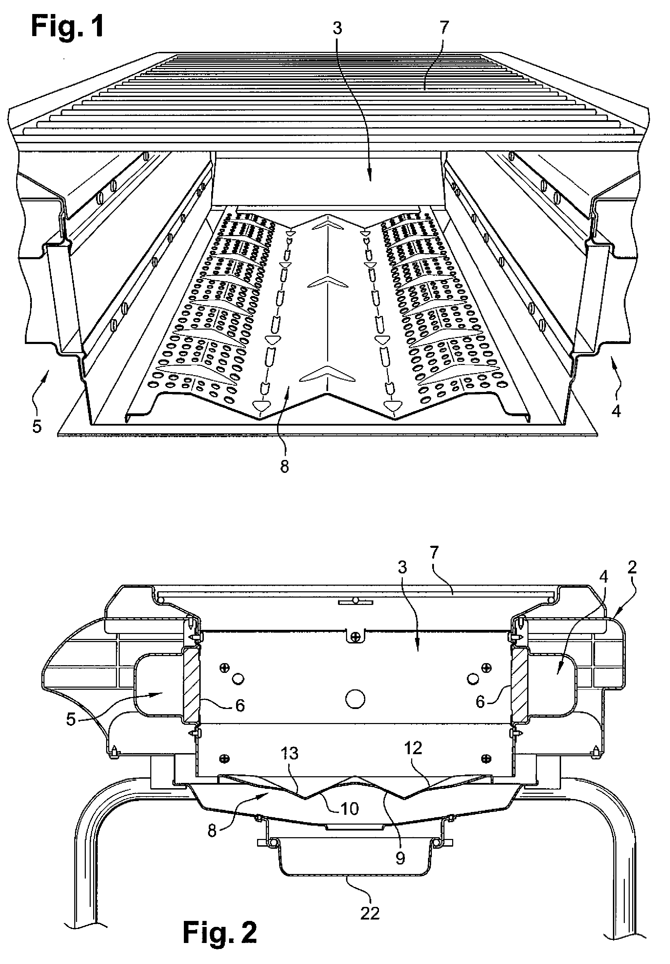

Ainsi que représenté sur les figures 1 et 2, un appareil de cuisson selon l'invention, selon un mode de réalisation de type gril à gaz, comprend un châssis 2 délimitant un puits de cuisson 3.

Dans le châssis sont logés deux brûleurs à gaz radiants 4, 5 situés de part et d'autre du puits de cuisson 3. Chaque brûleur à gaz radiant 4, 5 présente une surface rayonnante 6, émettant des infrarouges, adjacente au puits de cuisson 3. La surface rayonnante est sensiblement verticale.

Une grille de cuisson 7 transversale occupe une ouverture supérieure du puits de cuisson 3.

Un fond 8 s'étend au travers du puits de cuisson 3, en dessous de la surface rayonnante 6 des brûleurs 4, 5. Le fond 8 comprend deux premières zones planes inclinées réfléchissantes 9, 10 tournées respectivement vers les deux surfaces rayonnantes des deux brûleurs 4, 5. Ces deux premières zones sont adjacentes par leur bord le plus haut. Le fond 8 comprend également deux secondes zones latérales ajourées 12, 13 situées chacune entre un brûleur 4, 5 et les deux premières zones 9, 10.

Chaque première zone pleine réfléchissante 9, 10 est inclinée par rapport au plan de la grille de cuisson d'un angle de l'ordre de 25°.

Selon des variantes, l'angle peut être compris entre 10 et 50°, et de préférence entre 20 et 30°.

Chaque zone ajourée comprend une pluralité de trous traversant 11 permettant de diminuer la surface exposée au rayonnement des brûleurs radiant. Ces dispositions permettent de limiter l'échauffement de ces zones destinées à être proches des brûleurs et d'éviter que celles-ci dépassent la température d'inflammation des jus de cuisson qui peut être estimée à environ 280°.

Les secondes zones ajourées 12, 13 sont inclinées vers le bas en direction du centre du puits. Chaque seconde zone ajourée 12, 13 comprend un retour de fixation 14 sur son bord extérieur destiné à coopérer avec des moyens de fixation complémentaires du châssis 2.

Chaque zone ajourée 12, 13 comprend trois portions adjacentes d'inclinaisons différentes 15, 16, 17. En particulier, la zone ajourée comprend une première portion plane 15, une seconde portion 16 présentant une inclinaison vers le centre de la plaque et une troisième portion 17 présentant une inclinaison supérieure à celle de la seconde portion 16 vers le centre de la plaque.

Dans le mode réalisation représenté aux figures, l'inclinaison de la seconde portion 16 est de l'ordre de 4° par rapport à l'horizontale, et de 25° pour la troisième portion 17.

Les liaisons 18, 19 entre les premières zones pleines inclinées 9, 10 et les secondes zones ajourées 12, 13 comportent des lumières 20 traversant la plaque et permettant un écoulement des jus provenant de la grille de cuisson 7 vers un récipient de recueil 22 et ainsi une perméabilité vis-à-vis des liquides s'écoulant à partir de la grille 7.

L'extrémité supérieure 23 des deux premières zones pleines est positionnée ou sensiblement au même niveau que des parties latérales 15 des zones ajourées.

Les zones pleines 9, 10 et ajourées 12, 13 comprennent des rainures 24, 25 ménagées dans le sens de la pente de cette zone dont le fond est également incliné pour permettre un écoulement des jus.

Des nervures de renforcement 26 sont prévues au niveau des zones de liaison 18, 19 entre les zones pleines 9, 10 et ajourées 12, 13.

Dans le mode de réalisation représenté, le fond 8 est avantageusement constitué par une plaque métallique.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Appareil de cuisson, notamment du type gril à gaz, comprenant :
- un puits de cuisson (3),
- au moins un brûleur à gaz radiant (4, 5) sur le côté du puits de cuisson (3), présentant une surface rayonnante (6) émettant des infrarouges, adjacente au puits de cuisson et dont l'orientation par rapport à ce dernier présente une composante verticale,
- une grille de cuisson (7) transversale occupant une ouverture supérieure du puits de cuisson (3),
- un fond (8) s'étendant au travers du puits de cuisson, situé en dessous de la surface rayonnante (6) présentant une perméabilité vis-à-vis des liquides s'écoulant à partir de la grille (7) vers des moyens de recueil (22) situés en dessous du fond,
**caractérisé en ce que**
le fond (8) comporte au moins une première portion pleine inclinée réfléchissante (9, 10) tournée vers la surface rayonnante (6) d'un brûleur (4, 5) et une seconde zone latérale ajourée (12, 13) située entre la surface rayonnante (6) d'un brûleur (4,5) et la première zone pleine inclinée réfléchissante (9, 10).

2. Appareil selon la revendication 1, dans lequel la seconde zone ajourée (12, 13) est inclinée vers le bas en direction du centre du puits (3).

3. Appareil selon l'une des revendications précédentes, dans lequel l'extrémité supérieure (23) d'une première zone pleine (9, 10) est positionnée au dessous d'au moins une partie d'une zone ajourée (12, 13).

4. Appareil selon l'une des revendications précédentes, dans lequel le fond (8) comporte des lumières (20) le traversant au niveau d'une liaison (18, 19) entre une première zone pleine inclinée (9, 10) et une seconde zone ajourée (12, 13).

5. Appareil selon l'une des revendications précédentes, dans lequel au moins une seconde zone ajourée (12, 13) ou une première zone pleine (9, 10) comprend au moins une rainure (24, 25) ou nervure ménagée dans le sens de la pente de cette zone.

6. Appareil selon l'une des revendications précédentes, dans lequel la première zone pleine réfléchissante (9, 10) est inclinée par rapport au plan de la grille de cuisson (7) d'un angle compris entre 10 et 50°.

7. Appareil selon la revendication 6, dans lequel la première zone pleine réfléchissante (9, 10) est inclinée par rapport au plan de la grille de cuisson (7) d'un angle compris entre 20 et 30°.

8. Appareil selon l'une des revendications précédentes comprenant deux brûleurs à gaz (4, 5) situés de part et d'autre du puits de cuisson et dans lequel le fond comprend deux premières zones planes inclinées réfléchissante (9, 10) tournées respectivement vers les deux surfaces rayonnantes (6) des deux brûleurs (4, 5) et deux secondes zones latérales ajourées (12, 13) situées chacune entre un brûleur et les deux premières zones.

## Patentansprüche

1. Gargerät, insbesondere des Typs Gasgrill, das Folgendes umfasst:
- einen Garschacht (3),
- mindestens einen strahlenden Gasbrenner (4, 5) auf der Seite des Garschachts (3), der eine strahlende Oberfläche (6) aufweist, die Infrarotstrahlen sendet, neben dem Garschacht, und dessen Ausrichtung in Bezug zu diesem Letzteren eine vertikale Komponente aufweist,
- einen Quergargrill (7), der eine obere Öffnung des Garschachts (3) belegt,
- einen Boden (8), der sich durch den Garschacht erstreckt, der unterhalb der strahlenden Oberfläche (6) liegt, der eine Durchlässigkeit gegenüber Flüssigkeiten aufweist, die von dem Grill (7) ausgehend zu Auffangmitteln (22), die unterhalb des Bodens liegen, abfließen,
**dadurch gekennzeichnet, dass**,
der Boden (8) mindestens einen ersten massiven schrägen reflektierenden Abschnitt (9, 10), der zu der strahlenden Oberfläche (6) eines Brenners (4, 5) gerichtet ist, umfasst, und eine zweite seitliche durchbrochene Zone (12, 13), die zwischen der strahlenden Oberfläche (6) eines Brenners (4, 5) und der ersten massiven schrägen reflektierenden Zone (9, 10) liegt.

2. Gerät nach Anspruch 1, wobei die zweite durchbrochene Zone (12, 13) nach unten in Richtung der Mitte des Schachts (3) geneigt ist.

3. Gerät nach einem der vorhergehenden Ansprüche, wobei das obere Ende (23) einer ersten massiven Zone (9, 10) unterhalb mindestens eines Teils der durchbrochenen Zone (12, 13) positioniert ist.

4. Gerät nach einem der vorhergehenden Ansprüche, wobei der Boden (8) Langlöcher (20) umfasst, die ihn im Bereich einer Verbindung (18, 19) zwischen einer ersten massiven schrägen Zone (9, 10) und einer zweiten durchbrochenen Zone (12, 13) durchqueren.

5. Gerät nach einem der vorhergehenden Ansprüche, wobei mindestens eine zweite durchbrochene Zone (12, 13) oder eine erste massive Zone (9, 10) mindestens eine Nut (24, 25) oder Rippe, die in die Richtung der Neigung dieser Zone eingerichtet ist, umfasst.

6. Gerät nach einem der vorhergehenden Ansprüche, wobei die erste massive reflektierende Zone (9, 10) in Bezug zu der Ebene des Gargrills (7) um einen Winkel zwischen 10 und 50° geneigt ist.

7. Gerät nach Anspruch 6, wobei die erste massive reflektierende Zone (9, 10) in Bezug zu der Ebene des Gargrills (7) um einen Winkel zwischen 20 und 30° geneigt ist.

8. Gerät nach einem der vorhergehenden Ansprüche, das zwei Gasbrenner (4, 5) umfasst, die auf jeder Seite des Garschachts liegen, und wobei der Boden zwei erste flache schräge reflektierende Zonen (9, 10) umfasst, die jeweils zu den zwei strahlenden Oberflächen (6) der zwei Brenner (4, 5) gerichtet sind, und zwei seitliche durchbrochene Zonen (12, 13), die jeweils zwischen einem Brenner und den zwei ersten Zonen liegen.

## Claims

1. A cooking appliance, in particular of the gas grill type, comprising:
- a cooking shaft (3),
- at least one radiant gas burner (4, 5) on the side of the cooking shaft (3), having an infrared emitting radiating surface (6), adjacent to the cooking shaft, and whose orientation with respect to the latter has a vertical component,
- a transverse cooking grid (7) occupying an upper aperture of the cooking shaft (3),
- a bottom (8) extending through the cooking shaft, located below the radiating surface (6) having a permeability to the liquids flowing from the grid (7) to collecting means (22) located below the bottom,
**characterized in that**
the bottom (8) includes at least one first reflective inclined solid portion (9, 10) facing the radiating surface (6) of a burner (4, 5) and a second apertured lateral area (12, 13) located between the radiating surface (6) of a burner (4, 5) and the first reflective inclined solid area (9, 10).

2. The appliance according to claim 1, wherein the second apertured area (12, 13) is inclined downwardly towards the center of the shaft (3).

3. The appliance according to any of the preceding claims, wherein the upper end (23) of a first solid area (9, 10) is positioned below at least one portion of an apertured area (12, 13).

4. The appliance according to any of the preceding claims, wherein the bottom (8) includes openings (20) passing therethrough at a connection (18, 19) between a first inclined solid area (9, 10) and a second apertured area (12, 13).

5. The appliance according to any of the preceding claims, wherein at least a second apertured area (12, 13) or a first solid area (9, 10) comprises at least one groove (24, 25) or rib arranged in the direction of the slope of this area.

6. The appliance according to any of the preceding claims, wherein the first reflective solid area (9, 10) is inclined relative to the plane of the cooking grid (7) at an angle comprised between 10 and 50°.

7. The appliance according to claim 6, wherein the first reflective solid area (9, 10) is inclined relative to the plane of the cooking grid (7) at an angle comprised between 20 and 30°.

8. The appliance according to any of the preceding claims comprising two gas burners (4, 5) located on either side of the cooking shaft and wherein the bottom comprises two first reflective inclined planar areas (9, 10) respectively facing the two radiating surfaces (6) of the two burners (4, 5) and two second apertured lateral areas (12, 13) each located between a burner and the two first areas.
